# DEMANDE DE BREVET EUROPEEN

(11) **EP 2 177 635 A1**
(43) Date de publication de la demande: **21.04.2010**
(21) Numéro de dépôt: 08305663.0
(22) Date de dépôt: 09.10.2008
(51) Int. Cl.: C22B 7/00, C22B 7/04, C22B 9/10, C22B 21/00

(54) **Procédé de récupération par fusion d'au moins un métal non ferreux et additif siliceux pour la mise en oeuvre du procédé**

(71) Demandeur: Armabessaire, Jean, 77430 Pontault-Combault (FR)
(72) Inventeur: Armabessaire, Jean, 77430 Pontault-Combault (FR)
(74) Mandataire: Colas, Jean-Pierre

(57) **Abrégé**

L'invention concerne notamment un procédé de récupération d'au moins un métal non ferreux (11) compris dans des débris (9), par fusion desdits débris (9) dans un four (1), ledit procédé comprenant :
- une étape de chargement du four (1) en débris (9),
- une étape de fusion desdits débris (9) pour séparer ledit au moins un métal non ferreux (11) d'autres composants (13) que comportent lesdits débris (9). Le procédé est remarquable en ce qu'il comporte une étape d'adjonction d'un produit (15) comprenant de la silice en quantité suffisante pour former une couche étanche à l'air en surface des débris (9).
Avantageusement le produit d'adjonction comprenant de la silice inclut un produit fondant tel que la cryolite ou la fluorine.

## Description

La présente invention concerne un procédé de récupération par fusion d'au moins un métal non ferreux, tels que l'aluminium ou ses alliages, ou le zinc et ses alliages, et un produit pour la mise en oeuvre dudit procédé.

Il existe des procédés pour récupérer les métaux non ferreux de résidus industriels ou dits « de récupération ».

Les résidus industriels comprennent principalement des profilés, des tubes, des tôles, des pièces rebutées, des masselottes de coulée, et de copeaux d'usinage. De tels résidus sont en général propres, et faiblement oxydés, voire pas du tout oxydés.

Tel n'est pas le cas des résidus de récupération qui sont sales et oxydés, voire fortement oxydés. Les résidus de récupération proviennent notamment des pièces de fonderie, des culasses et blocs de moteurs, des boîtes de vitesse, des objets ménagers comme les canettes de boisson, les boîtes de conserve...

La récupération des métaux non ferreux compris dans de tels résidus (industriels ou de récupération) se fait généralement dans des fours rotatifs, à axe fixe ou basculant, fonctionnant sans entrée d'air dans la cuve ou autorisant une entrée d'air.

Pour permettre la récupération des métaux non ferreux dans les fours autorisant une entrée d'air, il est connu de faire fondre les résidus en ajoutant dans la cuve du sel gemme (encore appelé halite) permettant d'emprisonner les matières non métalliques lorsque le sel gemme est à l'état liquide. Eventuellement, un produit appelé « fondant » est ajouté au sel gemme pour faciliter la fusion du métal et emprisonner plus facilement les matières non métalliques.

Pour ce faire, il est nécessaire d'ajouter autant de sel gemme que de quantité de matières non métalliques contenues dans le four.

Il en résulte une consommation importante de sel pour récupérer les métaux non ferreux des résidus de récupération.

Par ailleurs, les scories résultant du mélange de sel et de matières métalliques sont polluantes pour l'environnement, et recyclables à un coût élevé.

Les fours fonctionnant sans entrée d'air, tels que ceux décrits dans la demande de brevet FR 2 672 620, permettent théoriquement de récupérer les métaux non ferreux sans ajouter de sel gemme.

Toutefois, pour charger de tels fours en résidus, il est nécessaire d'ouvrir une porte. L'ouverture de la porte autorise une entrée d'air dans le four qui est à l'origine de réactions exothermiques indésirables. En effet, de telles réactions exothermiques induisent une combustion du métal que l'on souhaite récupérer.

Aussi, il a été constaté que les utilisateurs de tels fours chargent, par sécurité, une certaine quantité de sel gemme qui permet en outre de limiter de telles réactions exothermiques.

L'objet de la présente invention est d'offrir une alternative à l'utilisation de sel gemme dans les fours, cette alternative étant moins polluante et financièrement plus économique que le sel gemme.

A cet effet, l'invention concerne, dans un premier temps un procédé de récupération d'au moins un métal non ferreux compris dans des débris, par fusion desdits débris dans un four, ledit procédé comprenant :
- une étape de chargement du four en débris,
- une étape de fusion desdits débris pour séparer ledit au moins un métal non ferreux d'autres composants que comportent lesdits débris.

Le procédé selon l'invention est remarquable en ce qu'il comporte une étape d'adjonction d'un produit comprenant de la silice en quantité suffisante pour former une couche étanche à l'air en surface des débris.

La présence de silice dans le produit permet, d'une part, d'accrocher lesdits autres composants que comportent les débris, et d'autre part de disposer d'un produit plus léger que le métal non ferreux que l'on souhaite récupérer. Le produit comprenant de la silice (ou un mélange de ce produit et desdits autres composants) se trouve ainsi toujours en surface des débris ou d'un mélange de débris et de métal fondu non ferreux.

Par ailleurs, la silice présentant une température de fusion supérieure à celle des métaux non ferreux que l'on souhaite généralement récupérer, le produit reste à l'état solide durant tout le procédé de récupération . Il est ainsi plus aisé de séparer le métal que l'on souhaite récupérer, qui est le seul élément se trouvant à l'état fondu en fin de procédé. Il est également plus aisé de récupérer le composé comprenant un mélange de produit comprenant de la silice et lesdits autres composants.

L'obtention de ce dernier composé à l'état solide, et plus particulièrement à l'état poudreux, permet de réaliser un nettoyage du four après récupération (ou retrait) du métal fondu non ferreux. En effet, dans le cadre de la mise en oeuvre du procédé dans des fours rotatifs, il suffit de faire tourner le four comprenant le composé après l'étape de récupération pour nettoyer les parois internes du four. Le composé obtenu est abrasif et permet de nettoyer les parois réfractaires facilitant ainsi le décrassage du four après la coulée du métal.

Le composé obtenu est par ailleurs recyclable, notamment dans les cimenteries pour fabriquer des bétons bâtiment-réfractaires ou cellulaires.

Le procédé selon l'invention permet ainsi, non seulement de pallier les inconvénients de l'état de la technique en proposant une solution moins coûteuse que celle utilisant le sel gemme, mais également il offre une solution plus avantageuse que celle de l'état de la technique en permettant une récupération plus simple des métaux non ferreux et en conduisant à la formation d'un composé recyclable.

Le procédé selon l'invention comporte également les caractéristiques suivantes, prises séparément ou en combinaison :
- l'étape d'adjonction est réalisée avant l'étape de fusion ;
- la quantité de produit comprenant de la silice est sensiblement comprise entre 10 et 20 % en poids de la quantité de débris chargée ;
- le procédé selon l'une quelconque des revendications précédentes, **caractérisé en ce que** le produit comprenant de la silice (15) est sec.
- le procédé comporte une étape de récupération dudit au moins un métal non ferreux à l'état liquide et, à l'issue de cette étape de récupération, une étape de nettoyage du four ;
- l'étape de nettoyage consiste à une mise en rotation du four comportant un composé comprenant le produit et les autres composants, le composé étant au moins partiellement à l'état de poudre ;
- on ajoute une quantité de produits fondants au produit comprenant de la silice ;
- les produits fondants comportent de la cryolite et / ou de la fluorine ;
- la quantité de cryolite et / ou de fluorine est sensiblement comprise entre 0 et 15 % en poids de la quantité de produit comprenant de la silice ;
- le produit comprenant de la silice est un sable dont la densité est comprise entre 1,6 et 1,8.

L'invention concerne également un produit qui est remarquable en ce qu'il comporte de la silice pour la mise en oeuvre du procédé tel que défini ci-dessus.

Le produit selon l'invention peut également comporter les caractéristiques suivantes, prises séparément ou en combinaison :
- le produit comporte au moins un produit fondant ;
- le produit fondant comporte de la fluorine ;
- le produit comporte une quantité de fluorine sensiblement comprise entre 0 et 15 % en poids par rapport à la quantité de silice, de préférence entre 0 et 6 % en poids ;
- le produit fondant comporte de la cryolite ;
- le produit comporte une quantité de cryolite sensiblement comprise entre 0 et 1 % en poids par rapport à la quantité de silice, de préférence entre 0 et 5 % en poids.

L'invention concerne enfin un composé remarquable en ce qu'il est obtenu par la mise en oeuvre des étapes suivantes :
- chargement d'un four en débris comprenant au moins un métal non ferreux et d'autres composants,
- adjonction d'un produit comprenant de la silice en quantité suffisante pour former une couche étanche à l'air en surface des débris,
- fusion desdits débris pour séparer ledit au moins un métal non ferreux d'autres composants que comportent lesdits débris,
- retrait dudit au moins un métal non ferreux à l'état liquide,
- et récupération d'un mélange constituant ledit composé et comprenant ledit produit comprenant de la silice et lesdits autres composants.

Selon un mode de réalisation qui sera décrit par la suite, le composé comporte :
- de la silice,
- de la fluorine en quantité sensiblement comprise entre 0 et 15 % en poids par rapport à la quantité de silice, de préférence entre 0 et 6 % en poids,
- et de la cryolite en quantité sensiblement comprise entre 0 et 10 % en poids par rapport à la quantité de silice, de préférence entre 0 et 5 % en poids.

L'invention sera d'avantage comprise au regard d'un exemple de réalisation qui va maintenant être présenté en faisant référence aux figures 1 à 5 annexées parmi lesquelles :
- la figure 1 est une vue en coupe schématique d'un four dans lequel ont été chargés des débris comprenant au moins un métal non ferreux à récupérer,
- la figure 2 est une vue en coupe schématique d'un four dans lequel ont été chargés les débris montrés en figure 1 et un produit conforme à l'invention,
- la figure 3 est une vue en coupe schématique d'un four en fonctionnement comprenant un mélange obtenu à partir des débris illustrés en figures 1 et 2 et du produit illustré en figure 2,
- la figure 4 est une est une vue en coupe schématique d'un four à l'arrêt, montrant l'étape de récupération dudit métal non ferreux compris dans lesdits débris après l'étape de fonctionnement illustrée en figure 3,
- et la figure 5 est une est une vue en coupe schématique d'un four en fonctionnement, pendant une étape de nettoyage conforme à l'invention.

Dans le cadre de l'exemple qui va maintenant être présenté, le procédé selon l'invention est mis en oeuvre dans un four fonctionnant sans entrée d'air tel que celui décrit dans la demande de brevet FR 2 672 620.

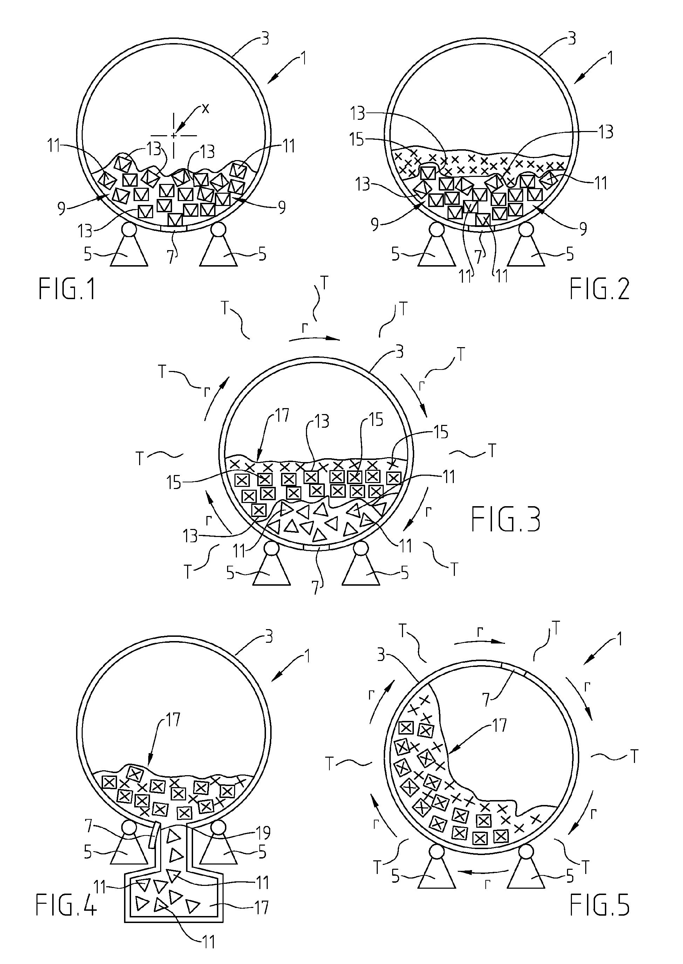

La figure 1 illustre schématiquement un tel four 1 comprenant une cuve 3 de forme sensiblement cylindrique, montée libre en rotation autour de son axe X.

La cuve 3 du four est montée sur des éléments de maintient 5, permettant éventuellement son basculement pour récupérer par gravité le métal à l'état liquide.

Pour ce faire, la cuve comporte également des moyens de déchargement par gravité illustrés schématiquement par une trappe 7 réalisée dans la paroi du four 3.

Il devra toutefois être entendu que les moyens de déchargement pourraient être réalisés différemment sans que cela ait une incidence sur la mise en oeuvre du procédé conforme à l'invention.

La figure 1 illustre la première étape du procédé conforme à l'invention.

Le four 1 est chargé en débris 9 comprenant au moins un métal non ferreux 11 que l'on souhaite récupérer, tel que par exemple l'aluminium ou ses alliages, ou le zinc et ses alliages. Le métal non ferreux 11 qui est contenu dans les débris 9 est illustré schématiquement par un triangle.

Les débris 9 comprennent également d'autres composants illustrés schématiquement par des carrés 13.

Les débris 9 peuvent être d'origine industrielle, ou bien de récupération, tels que définis précédemment.

Les débris 9 chargés dans le four 1 sont à l'état solide.

Après avoir chargé le four 1 en débris, on répand sur ces débris une couche de produit 15 comprenant de la silice (représenté par des croix sur la figure 2), de sorte que la couche recouvre totalement la surface des débris chargés (voir figure 2).

On estime que la quantité de produit chargée est suffisante lorsque les débris ne sont plus visibles, ces derniers étant recouverts en totalité par le produit 15. La couche de produit 15 comprenant de la silice constitue alors une couche d'étanchéité à l'air en surface des débris.

La quantité de produit 15 comportant de la silice qui est chargée dans le four est sensiblement comprise entre 10 et 20 % en poids de la quantité de débris chargée dans le four.

Dans le cadre du présent exemple de réalisation, le produit comprenant de la silice comporte du sable de densité comprise entre 1,6 et 1,8, tel que celui utilisé couramment en fonderie.

Une telle densité permet de former une couche imperméable à l'air sur les débris avec une quantité de sable plus faible que celle qui devrait être utilisée avec un sable de densité plus élevée.

Par ailleurs, dans le cadre du présent exemple, le produit 15 comprend sensiblement entre 0 et 6% en poids de fluorine CaFz₂, et sensiblement entre 0 et 5% en poids de cryolite artificielle AlF₃.

Le produit 15 peut également comporter 2% en poids de colorant.

La fluorine et la cryolite sont des produits fondants, c'est-à-dire des produits qui favorisent la liquéfaction du métal non ferreux compris dans les débris 9.

Grâce à la présence de ces produits fondants, la réaction de séparation du métal non ferreux 11 des autres composants 13 des débris 9 est accélérée.

Le produit 15 comportant de la silice est chargé dans le four de préférence à l'état sec.

En effet, dans le cadre de cet exemple, le four utilisé est un four qui fonctionne sans entrée d'air. L'introduction d'un produit humide dans la cuve 3 serait à l'origine de génération de vapeur d'eau néfaste pour le fonctionnement du four et pour la réaction recherchée.

Il devra toutefois être entendu que, dans le cadre d'une application du procédé dans un four traditionnel rotatif autorisant une entrée et une sortie d'air, un produit humide pourrait être utilisé sans sortir du cadre de l'invention.

Une fois que les débris 9 et le produit 15 ont été chargés dans le four, la cuve 3 est entraînée en rotation (rotation symbolisée par les flèche r), de sorte à mélanger les débris et le produit 15. On augmente par ailleurs la température interne de la cuve pour permettre la fusion des métaux non ferreux 11 compris dans les débris (augmentation de température symbolisée par les symboles T).

Le produit 15, comprenant la silice, est plus léger que le métal non ferreux 11, que l'on souhaite récupérer.

Ainsi le produit 15 reste toujours en surface dans la cuve et isole les débris de l'air, même pendant l'étape de fusion des débris où la cuve est entraînée en rotation et où on augmente la température de la cuve pour séparer le métal non ferreux des autres composants que comportent les débris 9.

Les métaux non ferreux 11 se liquéfient et forment une couche dans le fond de la cuve 3 (voir figure 3).

Le produit 15 reste à l'état solide en surface dans la cuve et il se mélange aux autres composants 13 des débris 9 pour former un composé résiduel 17.

Le composé résiduel 17 se présente en particulier sous la forme d'une poudre.

A ce stade du procédé, d'autres débris 9 peuvent être ajoutés dans la cuve 3 sans avoir à vider cette dernière.

En effet, le composé résiduel 17 reste en surface et forme une couche imperméable à l'air. Ainsi, aucune réaction exothermique ne se produit lors de l'ouverture du four 1.

Quand le four 1 est plein, et après liquéfaction de tout le métal non ferreux 11, on procède à la vidange du four par sécurité au moyen de la trappe 7 (figure 4).

Pour ce faire, une cuve de récupération 17 est reliée à la cuve 3 par un conduit 19.

Pour faciliter la vidange de la cuve 3, le four peut également être basculé de sorte à passer d'une position où son axe est orienté suivant une direction horizontale à une position où son axe est orienté suivant une direction inclinée par rapport à une direction horizontale.

Le métal non ferreux liquéfié se trouvant au fond de la cuve 3 se déverse alors dans la cuve de récupération 17 via le conduit 19.

Le composé résiduel 17 reste toujours en surface du métal liquide, de sorte que l'on peut surveiller, lors de la vidange, le niveau du composé résiduel.

Quand le niveau du composé résiduel atteint le fond de la cuve 3, l'étape de vidange est arrêtée.

La trappe 7 est alors refermée.

La cuve 3 ne comporte sensiblement que le composé résiduel 17.

La figure 5 illustre schématiquement une étape de nettoyage de la cuve 3 du four 1 après l'étape de récupération du métal non ferreux 11, illustrée en figure 4.

Dans le cadre de cet exemple, l'étape de nettoyage consiste à remettre en marche le four 1.

La remise en marche du four 1 consiste à entraîner de nouveau en rotation la cuve 3 autour de son axe, et à augmenter la température interne de la cuve 3.

Le composé résiduel 17 à l'état de poudre a un effet abrasif sur la paroi interne da la cuve 3. L'augmentation de température interne de la cuve 3, associée au mouvement du composé résiduel dans la cuve provoqué par le mouvement de rotation du four 1, permet de décoller les éventuels résidus brûlés sur la paroi et de les mélanger au composé résiduel.

Une fois l'étape de nettoyage réalisée, et que la température de la cuve 3 a atteint sensiblement la température ambiante, la cuve 3 est vidée du composé résiduel 17.

Le composé résiduel 17 peut être alors conditionné pour être vendu comme adjuvent aux préparations de bétons, par exemple.

Comme on peut le comprendre de la description qui précède, dans le cadre du présent exemple, le composé résiduel comporte essentiellement du sable, de la cryolite et de la fluorine, ainsi que d'autres composés que comportaient les débris initiaux 9.

On comprend de la description qui précède comment le procédé selon l'invention permet de remplacer l'ajout de sel gemme pour éviter les réactions exothermiques dans les fours.

Il devra toutefois être entendu que l'invention n'est pas limitée au mode de mise en oeuvre qui précède.

Par exemple, le produit comportant de la silice pourrait comprendre une quantité de produit fondant comprise sensiblement entre 0 et 15% en poids, sans sortir du cadre de l'invention.

## Revendications

1. Procédé de récupération d'au moins un métal non ferreux (11) compris dans des débris (9), par fusion desdits débris (9) dans un four (1), ledit procédé comprenant :
- une étape de chargement du four (1) en débris (9),
- une étape de fusion desdits débris (9) pour séparer ledit au moins un métal non ferreux (11) d'autres composants (13) que comportent lesdits débris (9),
**caractérisé en ce qu'**il comporte une étape d'adjonction d'un produit (15) comprenant de la silice en quantité suffisante pour former une couche étanche à l'air en surface des débris (9).

2. Procédé selon la revendication 1, **caractérisé en ce que** l'étape d'adjonction est réalisée avant l'étape de fusion.

3. Procédé selon la revendication 1 ou 2, **caractérisé en ce que** ladite quantité de produit comprenant de la silice (15) est sensiblement comprise entre 10 et 20 % en poids de la quantité de débris (9) chargée.

4. Procédé selon l'une quelconque des revendications précédentes, **caractérisé en ce que** le produit comprenant de la silice (15) est sec.

5. Procédé selon l'une quelconque des revendications précédentes, **caractérisé en ce qu'**il comporte une étape de récupération dudit au moins un métal non ferreux (11) à l'état liquide et, à l'issue de cette étape de récupération, une étape de nettoyage du four (1).

6. Procédé selon la revendication 5, **caractérisé en ce que** l'étape de nettoyage consiste à une mise en rotation du four (1) comportant un composé (17) comprenant le produit (15) et lesdits autres composants (13), ledit composé (17) étant au moins partiellement à l'état de poudre.

7. Procédé selon l'une quelconque des revendications précédentes, **caractérisé en ce que** l'on ajoute une quantité de produits fondants audit produit comprenant de la silice (15).

8. Procédé selon la revendication 7, **caractérisé en ce que** lesdits produits fondants comportent de la cryolite et / ou de la fluorine.

9. Procédé selon la revendication 7 ou 8, **caractérisé en ce que** ladite quantité est sensiblement comprise entre 0 et 15 % en poids de la quantité de produit comprenant de la silice.

10. Procédé selon l'une quelconque des revendications 1 à 9, **caractérisé en ce que** le produit comprenant de la silice (15) est un sable dont la densité est comprise entre 1,6 et 1,8.

11. Produit (15) **caractérisé en ce qu'**il comporte de la silice pour la mise en oeuvre du procédé selon l'une quelconque des revendications 1 à 10.

12. Produit selon la revendication 11, **caractérisé en ce qu'**il comporte au moins un produit fondant.

13. Produit selon la revendication 12, **caractérisé en ce que** le produit fondant comporte de la fluorine.

14. Produit selon la revendication 13, **caractérisé en ce qu'**il comporte une quantité de fluorine sensiblement comprise entre 0 et 15 % en poids par rapport à la quantité de silice, de préférence entre 0 et 6 % en poids.

15. Produit selon l'une quelconque des revendications 11 à 14, **caractérisé en ce que** le produit fondant comporte de la cryolite.

16. Produit selon la revendication 15, **caractérisé en ce qu'**il comporte une quantité de cryolite sensiblement comprise entre 0 et 1 % en poids par rapport à la quantité de silice, de préférence entre 0 et 5 % en poids.

17. Composé (17) **caractérisé en ce qu'**il est obtenu par la mise en oeuvre des étapes suivantes :
- chargement d'un four (1) en débris (9) comprenant au moins un métal non ferreux (11) et d'autres composants (13),
- adjonction d'un produit comprenant de la silice (15) en quantité suffisante pour former une couche étanche à l'air en surface des débris,
- fusion desdits débris pour séparer ledit au moins un métal non ferreux d'autres composants que comportent lesdits débris (9),
- retrait dudit au moins un métal non ferreux (11) à l'état liquide,
- et récupération d'un mélange constituant ledit composé (17) et comprenant ledit produit comprenant de la silice (15) et lesdits autres composants (13).

18. Composé selon la revendication 17, **caractérisé en ce qu'**il comporte :
- de la silice,
- de la fluorine en quantité sensiblement comprise entre 0 et 15 % en poids par rapport à la quantité de silice, de préférence entre 0 et 6 % en poids,
- et de la cryolite en quantité sensiblement comprise entre 0 et 10 % en poids par rapport à la quantité de silice, de préférence entre 0 et 5 % en poids.
